# EUROPÄISCHE PATENTANMELDUNG

(11) **EP 3 431 538 A1**
(43) Veröffentlichungstag der Anmeldung: **23.01.2019**
(21) Anmeldenummer: 17181680.4
(22) Anmeldetag: 17.07.2017
(51) Int. Cl.: C08K 5/151, C08K 5/29, C08L 67/02, C08L 79/08

(54) **ZUSAMMENSETZUNGEN ENTHALTEND POLYMERES CARBODIIMID, EPOXID UND POLYESTER-BASIERTE POLYMERE, DEREN HERSTELLUNG UND VERWENDUNG**

(71) Anmelder: LANXESS Deutschland GmbH, 50569 Köln (DE)
(72) Erfinder: LAUFER, Wilhelm, 67158 Ellerstadt (DE); NEUWALD, Boris, 50733 Köln (DE); BIENMÜLLER, Matthias, 47803 Krefeld (DE)

(57) **Zusammenfassung**

Die vorliegende Erfindung betrifft Zusammensetzungen enthaltend polymeres Carbodiimid, Epoxid und polyester-basierte Polymere, deren Herstellung und Verwendung.

## Beschreibung

Die vorliegende Erfindung betrifft Zusammensetzungen enthaltend polymeres Carbodiimid, Epoxid und Polyester-basierte Polymere, deren Herstellung und Verwendung zum Hydrolyseschutz.

Diverse Carbodiimiden haben sich in vielen Anwendungen bewährt, z.B. als Hydrolyseschutzmittel für thermoplastische Kunststoffe, Ester-basierte Polyole, Polyurethane, Triglyceride und Schmierstofföle etc. Sie haben allerdings den Nachteil der Emission von gesundheitsbedenklichen Gasen und sind teuer und aufwändig in der Herstellung.

Epoxide sind preiswerter in der Herstellung, haben jedoch den Nachteil, dass diese auch in sehr hohen Konzentrationen nicht die hydrolysestabilisierende Wirkung der Carbodiimide erreichen. Sie wirken lediglich als Säurefänger und führen nur ungenügend zu einer Langzeitstabilisierung bei höheren Temperaturen. Besonders in sehr anspruchsvollen Anwendungen unter Bedingungen, wie hoher Luftfeuchtigkeit und Temperatur versagen diese in Ihrer Wirkung als Hydrolyseschutzmittel, da in der Regel die esterbasierten Kunststoffe bei Temperaturen oberhalb von 200 °C verarbeitet werden. In DE 10349168 A1 wird ein Hydrolyseschutzmittel aus epoxidierten Fettsäureestern und -glyceriden, sowie einer Mischung aus diesen mit einem monomeren Carbodiimid beschrieben. Die hier beschriebenen Stabilisatoren wirken als Säurefänger in Ölen. Diese zeigen jedoch unter den oben genannten Bedingungen bei der Bearbeitung von Ester-basierten thermoplastischen Kunstoffen keine oder nur eine ungenügende Wirkung in der Langzeitstabilität gegen Hydrolyse. Weiterhin führt der Einsatz von monomeren Carbodiimide zu einer verstärkten Emission giftiger Gasen.

Aufgabe der vorliegenden Erfindung war es daher, neue kostengünstige Zusammensetzungen bereitzustellen, die hydrolyse-beständig sind, kostengünstig herstellbar sind und eine reduzierte Emission zeigen.

Überraschenderweise wurde nun gefunden, dass die vorgenannte Aufgabe dann erfüllt werden kann, wenn eine Kombination aus mindestens einem polymeren aromatischen Carbodiimid, mindestens einem Epoxid mit mindestens 2 Epoxidgruppen und mindestens einem Polyester-basierten Polymer, insbesondere einem Polyalkylenterephthalat oder Polylactid, eingesetzt wird.

Gegenstand der vorliegenden Erfindung sind daher Zusammensetzungen, enthaltend
(a) mindestens ein polymeres aromatisches Carbodiimid, der Formel (I)

   R¹-R²-(-N=C=N-R²-)ₘ-R¹ (I)

   in dem
   - m: einer ganzen Zahl von 2 bis 500, bevorzugt 3 bis 20, ganz besonders bevorzugt 4 bis 10 entspricht,
   - R²: für C₁-C₁₂-Alkyl-substituierte Arylene, C₇-C₁₈-Alkylaryl-substituierte Arylene sowie gegebenenfalls für C₁-C₁₂-Alkyl- substituierte über C₁-C₈-Alkylengruppen verbrückte Arylene, die in Summe 7 bis 30 Kohlenstoffatome aufweisen, sowie Arylen steht, vorzugsweise 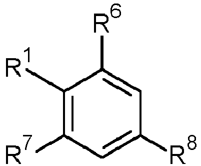
   - R⁶, R⁷ und R⁸: jeweils unabhängig für Methyl- oder Ethyl steht, wobei jeder Benzolring nur eine Methyl-Gruppe aufweist und n = 1 bis 10
   und
   - R¹: -NCO, -NCNR³-NHCONHR³, -NHCONR³R⁴ oder -NHCOOR⁵ ist,
   wobei R³ und R⁴ gleich oder verschieden sind und einen C₁-C₁₂-Alkyl-, C₆-C₁₂-Cycloalkyl-, C₇-C₁₈-Aralkyl- oder Arylrest darstellen und R⁵ einem C₁-C₂₂- Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder ein Alkoxypolyoxyalkylenrest entspricht,
(b) mindestens ein Epoxid, vorzugsweise mit mindestens 2 Epoxidgruppen und
(c) mindestens ein thermoplastisches Polyester-basiertes Polymer.

Der Begriff Arylen umfasst dabei insbesondere Phenylen-, Naphthylen- Anthrylen- und/oder Phenanthrylen-Reste, vorzugsweise Phenylenreste.

Bei den polymeren aromatischen Carbodiimiden a) handelt es sich vorzugsweise um Verbindungen der Formel (II), 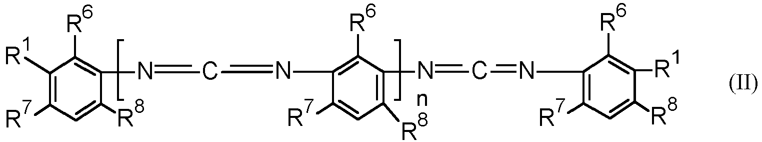
bei denen R¹ ausgewählt ist aus der Gruppe -NCO, -NHCONHR³, -NHCONR³R⁴ oder -NHCOOR⁵,
wobei R³ und R⁴ gleich oder verschieden sind und einen C₁-C₁₂-Alkyl-, C₆-C₁₂-Cycloalkyl-, C₇-C₁₈-Aralkylrest- oder Arylrest darstellen,
R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen, bevorzugt 12 - 20, besonders bevorzugt 16 - 18 Kohlenstoffatomen, oder einem Alkoxypolyoxyalkylenrest entspricht, und
R⁶, R⁷ und R⁸ jeweils unabhängig für Methyl- oder Ethyl steht, wobei jeder Benzolring nur eine Methyl-Gruppe aufweist und n = 1 bis 10 bedeutet.

Der Carbodiimid-Gehalt (NCN-Gehalt, gemessen durch Titration mit Oxalsäure) der erfindungsgemäß eingesetzten Carbodiimide der Formel (II) liegt vorzugsweise bei 2 - 14 Gew.%, bevorzugt bei 4 - 13 Gew.%, besonders bevorzugt bei 6 - 12 Gew.%.

Die erfindungsgemäß eingesetzten Carbodiimide der Formel (II) weisen darüber hinaus vorzugsweise mittlere Molmassen (Mw) von 1000 - 5000 g/mol, bevorzugt 1500 - 4000 g/mol, besonders bevorzugt 2000 - 3000 g/mol auf, bestimmt mittels GPC-Viskometrie.

Weiterhin sind Carbodiimide der Formel (II) bevorzugt, die eine Polydispersität D = Mw/Mn von 1,2 - 2,2, besonders bevorzugt von 1,4 - 1,8 aufweisen.

Bei den Carbodiimiden handelt vorzugsweise es sich um kommerziell verfügbare Verbindungen wie z.B. die polymeren Carbodiimiden mit dem Namen Stabaxol® der Fa. Lanxess Deutschland GmbH. Sie können aber auch beispielsweise nach den in der EP14191710.4 beschriebenen Verfahren hergestellt werden.

Bei den Epoxiden der Komponente b) handelt es sich vorzugsweise um epoxidierte Verbindungen, vorzugsweise epoxidierte natürliche Öle oder um epoxidierte Fettsäureester. Bevorzugt weist die Komponente b) insgesamt mindestens zwei Epoxid-Gruppen pro Molekül auf, wobei vorzugsweise wenigstens eine Epoxid-Gruppe endständig ist.

Bevorzugte epoxidierte natürliche Öle basieren auf wenigstens einem Öl aus der Gruppe Olivenöl, Leinöl, Erdnussöl, Palmöl, Sojabohnenöl und Lebertran. Besonders bevorzugt ist Leinöl oder Sojabohnenöl, ganz besonders bevorzugt Leinöl.

Das mittlere Molekulargewicht der als Komponente b) einzusetzenden epoxidierten natürlichen Öle liegt vorzugsweise im Bereich von 500 bis 1000g/mol und wird bestimmt durch matrixunterstützte Laser-Desorptions/lonisations-Flugzeit-Massenspektrometrie gemäß DIN EN ISO 10927. Erfindungsgemäß bevorzugt einzusetzende Lein- oder Sojabohnenöle sind Gemische von Trifettsäureglyzeriden, wobei der C₁₈-Carbonsäureanteil überwiegt.

Epoxidierte natürliche Öle werden im Allgemeinen nach den für einen Fachmann geläufigen Methoden hergestellt; siehe Angew. Chem. 2000, 112, 2292 - 2310**.**

Bevorzugte epoxidierte Fettsäureester erhält man vorzugsweise aus ungesättigten aliphatischen Carbonsäuren mit 10 bis 40 C-Atomen, bevorzugt mit 16 bis 22 C-Atomen, durch Umsetzung mit aliphatischen gesättigten Alkoholen mit 2 bis 40 C-Atomen, vorzugsweise 2 bis 6 C-Atomen.

Vorzugsweise werden bei der Herstellung der epoxidierten Fettsäureester dabei 1- oder 2-wertige Carbonsäuren eingesetzt. Besonders bevorzugt wird wenigstens eine Carbonsäure aus der Gruppe Pelargonsäure, Palmitinsäure, Laurinsäure, Margarinsäure, Dodecandisäure, Behensäure, Stearinsäure, Caprinsäure, Montansäure, Linolsäure, Linolensäure und Ölsäure eingesetzt.

Vorzugsweise werden bei der Herstellung der epoxidierten Fettsäureester 1- bis 4-wertige aliphatische gesättigte Alkohole eingesetzt. Besonders bevorzugt wird wenigstens ein Alkohol ausgewählt aus der Gruppe n-Butanol, n-Octanol, Stearylalkohol, Ethylenglykol, Propylenglykol, Neopentylglycol, Pentaerythrit und Glycerin. Insbesondere bevorzugt ist Glycerin.

Es können auch Mischungen verschiedener Ester und / oder Öle eingesetzt werden.

Die Einführung der Epoxid-Funktion in die vorstehend genannten Ester und / oder Öle erfolgt über Reaktion dieser mit epoxidierenden Agentien, vorzugsweise mit Persäuren, insbesondere mit Peressigsäure. Derartige Umsetzungen sind dem Fachmann hinreichend bekannt.

Die Herstellung epoxidierter Verbindungen ist dem Fachmann ebenfalls bekannt. Bevorzugte epoxidierte Verbindungen sind Polyglycidyl- oder Poly-(beta-methylglycidyl)-ether, vorzugsweiseerhältlich durch Umsetzung einer Verbindung mit mindestens zwei freien alkoholischen oder phenolischen Hydroxygruppen und / oder durch Umsetzung von phenolischen Hydroxygruppen mit einem substituierten Epichlorhydrin.

Bevorzugte Polyglycidyl- oder Poly-(beta-methylglycidyl)-ether leiten sich ab von acyclischen Alkoholen, insbesondere Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimetylpropan, Bistrimethylolpropan, Pentaerythrit, Sorbit sowie von Polyepichlorhydrinen.

Alternativ bevorzugte Polyglycidyl- oder Poly-(beta-methylglycidyl)-ether leiten sich ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en, oder sie besitzen aromatische Kerne basierend auf N,N-Bis-8,2-hydroxyethyl)-anilin oder p,p'-Bis-(2-hydroxyethyl-amino)-diphenylmethan.

Bevorzugte epoxidierte Verbindungen basieren zudem auf einkernigen Phenolen, auf mehrkernigen Phenolen.

Bevorzugte einkernige Phenole sind Resorcin oder Hydrochinon.

Bevorzugte mehrkernige Phenole sind Bis-(4hydroxyphenyl)-methan, 2,2-Bis-(4-hydroxyphenyl)-propan, 2,2-Bis-(3,5-dibrom-4-hydroxyphenyl)-propan oder 4,4'-Dihydroxydiphenylsulfon.

Bevorzugte Kondensationsprodukte von Phenolen mit Formaldehyd sind Phenol-Novolake.

Bevorzugte aromatische Epoxid-Verbindungen weisen 2 endständige Epoxid-Funktionen auf.

Bevorzugte aromatische Epoxid-Verbindung mit 2 endständigen Epoxid-Funktionen ist ein oligomeres Reaktionsprodukt aus Bisphenol A mit Epichlorhydrin mit einem gemäß EN ISO 10927 mittleren Molekulargewicht im Bereich von 900 bis 1200 g/mol und einem Epoxy Index (nach ISO 3001) im Bereich von 450 bis 600 Gramm pro Äquivalent. Besonders bevorzugt handelt es sich bei Komponente c) um ein oligomeres Reaktionsprodukt aus Bisphenol A mit Epichlorhydrin der Formel (III), 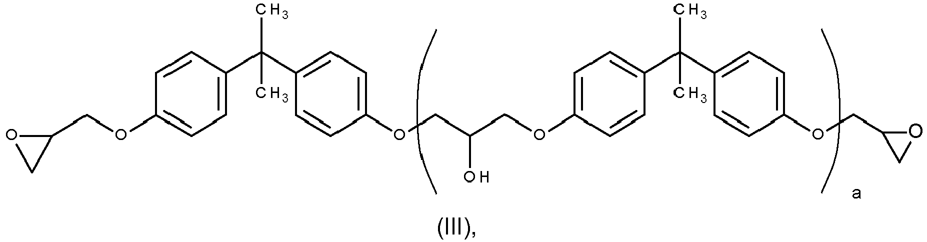 mit a von 0 bis 10, vorzugsweise mit a von 1 bis 8, besonders bevorzugt mit a von 1 bis 6, besonders bevorzugt im Bereich von 2 bis 3, wobei a der durchschnittlichen Anzahl entspricht.

Vorzugsweise werden die Komponenten c) nach einem Verfahren gemäß US2002/0128428 A1 hergestellt und weisen dann gemäß EN ISO 10927 ein mittleres Molekulargewicht im Bereich von 900 bis 1200 g/mol (entspricht in der Formel (III) einem a im Bereich von 2 bis 3) und einem Epoxy Index (nach ISO 3001) im Bereich von 450 bis 600 Gramm pro Äquivalent auf.

Bevorzugt besitzt eine erfindungsgemäß einzusetzende Epoxid-Verbindung einen Erweichungspunkt nach Mettler gemäß DIN 51920 im Bereich von 0 bis 150°C, besonders bevorzugt 50°C bis 120°C, ganz besonders bevorzugt im Bereich von 60°C bis 110°C und insbesondere im Bereich von 75°C bis 95°C. Der Erweichungspunkt nach Mettler ist die Temperatur, bei der die Probe aus einem zylindrischen Nippel mit einer Ausflussöffnung von 6,35 mm Durchmesser ausfließt, wobei sie eine 19 mm tiefer liegende Lichtschranke unterbricht. Zu diesem Zweck wird die Probe an Luft unter konstanten Bedingungen aufgeheizt

Vorzugsweise einzusetzende Epoxid-Verbindungen weisen ein mittleres Epoxidäquivalent-Gewicht (EEW, Gramm Harz die ein Mol epoxidisch gebundenen Sauerstoff enthalten) via Titration gemäß DIN 16945 im Bereich von 160 bis 2000 g/eq auf, bevorzugt im Bereich von 250 bis 1200 g/eq, besonders bevorzugt im Bereich von 350 bis 1000 g/eq und insbesondere bevorzugt im Bereich von 450 bis 800 g/eq.

Insbesondere bevorzugt wird als Komponente b) ein Poly(Bisphenol A-co-Epichlorhydrin) [CAS Nr. 25068-38-6] eingesetzt, vorzugsweise mit einem durch MALDI-TOF-Massenspektrometrie durch matrixunterstützte Laser-Desorptions/lonisations-Flugzeit-Massenspektrometrie gemäß EN ISO 10927 zu bestimmenden zahlenmittleren Molekulargewicht (Mₙ) im Bereich von 600 bis 1800 g/mol, beispielsweise zu beziehen als Epilox® von Leuna Harze GmbH, Leuna.

Weitere bevorzugte Epoxid-Verbindung mit mindestens 2 Epoxid-Funktionen sind Verbindungen aus der Reihe der Epoxide, kommerziell verfügbar unter den Namen Joncryl® der Fa. BASF AG wie z. B. das Joncryl® 4368 die folgende Einheiten in beliebiger Kombination enthalten 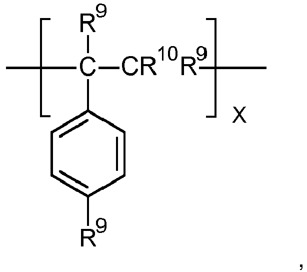 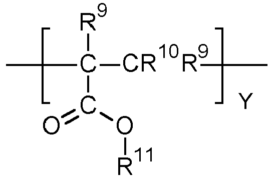 und

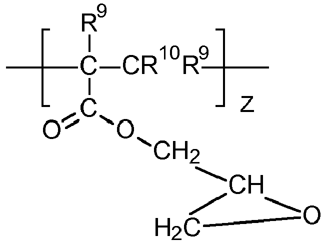

Mit R⁹, R¹⁰ = unabhängig voneinander H, C₁-C₈ -Alkyl, R¹¹ = unabhängig voneinander C₁-C₈ -Alkyl, x, y = 1 - 20, z = 2 - 20 , wobei als Endgruppen R* mit H, C₁-C₈ -Alkyl stehen.

Bevorzugt entspricht das Epoxid der Formel (IV)

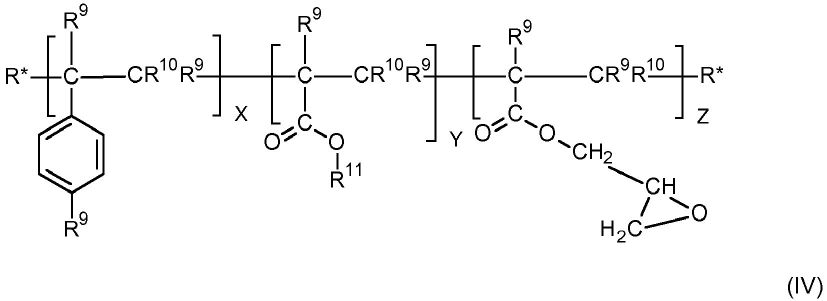

Mit R⁹, R¹⁰ = unabhängig voneinander H, C₁-C₈ -Alkyl, R¹¹ = unabhängig voneinander C₁-C₈ -Alkyl, x, y = 1 - 20, z = 2 - 20 , wobei als Endgruppen R* mit H, C₁-C₈ -Alkyl stehen.

Bei den thermoplastischen Polyester-basierten Polymeren c) handelt es sich vorzugsweise um Poly-C₁-C₈ -alkylterephthalate, besonders bevorzugt um Polyethylenterephthalat (PET), Polybutylenterephthalat (PBT), Polybutylenadipat-Terephthalate (PBAT), Polytrimethylenterephthalat (PTT), sowie Copolyester, thermoplastische Polyester-Elastomere (TPE E), Ethylenvinylacetat (EVA), Polymilchsäure (PLA) und/oder PLA-Derivate, Polybutylensuccinate (PBS), Polyhydroxyalkanoate (PHA), sowie verschiedene Blends daraus.

Ganz besonders bevorzugt sind die Poly-C₁-C₈-alkylterephthalate, wie Polyethylenterephthalat (PET), Polybutylenterephthalat (PBT) oder Polybutylenadipat-terephthalat (PBAT) und Polylactide (PLA).

In einer weiteren bevorzugte Ausführungsform der Erfindung handelt es bei den thermoplastischen Polyester-basierten Polymeren c) um wenigstens ein Poly-C₁-C₈-alkylenterephthalat bevorzugt Polybutylenterephthalat (PBT), und wenigstens ein Copolymerisat aus einem Olefin und aus einem Acrylsäureester eines aliphatischen Alkohols, wobei der nach ISO 1133 zu bestimmende Melt-Flow-Index (MFI) des Copolymerisats 50 g /10 min, bevorzugt 150 g / 10 min nicht unterschreitet und dieser bei 190°C und einem Prüfgewicht von 2.16 kg gemessen bzw. bestimmt wird.

In einer bevorzugten Ausführungsform der vorliegenden Erfindung enthält die erfindungsgemäße Zusammensetzung
a) 0,2 bis 2 Gew.-%, bevorzugt 0,4 bis 1,5 Gew.-%, besonders bevorzugt 0,5 bis 1,0 Gew.-%;
b) 0,05 bis 4 Gew.-%, bevorzugt 0,1 bis 2 Gew.-%, besonders bevorzugt 0,5 bis 1,5 Gew.-%;
c) 94 bis 99,75 Gew.-%, bevorzugt 96,5 bis 99,5 Gew.-%, besonders bevorzugt 97,5 bis 99,0 Gew.-%.

In einer weiteren bevorzugten Ausführungsform der vorliegenden Erfindung sind in den Zusammensetzungen neben den Komponenten a), b) und c) keine weiteren Komponenten enthalten, wobei die Summe der Anteile an a), b) und c) 100 Gew.% beträgt.

Gegenstand der vorliegenden Erfindung ist zudem ein Verfahren zur Herstellung der Zusammensetzung, wonach die Komponenten a) und b) in mindestens ein thermoplastisches Polyester-basiertes Polymer c) eingemischt werden. Bevorzugt sind hier Extruder oder Kneter, besonders bevorzugt Extruder. Dabei handelt es sich um handelsübliche über alle gängigen Rühr- und Mischaggregate Aggregate.

In einer bevorzugten Ausführungsform der vorliegenden Erfindung erfolgt die Einmischung der Komponenten a), b) und c) bei Temperaturen von 150 bis 300°C.

In einer weiteren Ausführungsform des erfindungsgemäßen Verfahrens werden weitere Additive, vorzugsweise Nukleierungsmittel, Fasern zur Verstärkung, Schlagzähigkeitsmodifikatoren, Fließverbesserer und/oder UV-Stabilisatoren in die Mischung aus den Komponenten a), b) und c) eingemischt.

Die vorliegende Erfindung betrifft weiterhin ein Verfahren zur Herstellung von hydrolysestabilen Erzeugnissen, indem man Zusammensetzungen enthaltend die Komponenten a), b) und c) in wenigstens einem Mischaggregat, vorzugsweise einem Compounder, zu Formmassen verarbeitet und diese einer Weiterverarbeitung, vorzugsweise einem Spritzgussverfahren oder einer Extrusion zur Herstellung von Erzeugnissen unterzieht.

Erfindungsgemäße Verfahren zur Herstellung von Erzeugnissen durch Extrusion oder Spritzguss werden bei Schmelztemperaturen im Bereich von 160 bis 330°C, bevorzugt im Bereich von 190 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar, durchgeführt.

Bei der Extrusion unterscheidet man vorzugsweise in Profilextrusion und sequentielle Coextrusion. Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen **(**Thielen, Hartwig, Gust, "Blasformen von Kunststoffhohlkörpern", Carl Hanser Verlag, München 2006, Seite 127-129**).**

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Als Rohstoff werden erfindungsgemäße Zusammensetzungen eingesetzt, die vorzugsweise durch Compoundieren bereits zu einer Formmasse und diese wiederum vorzugsweise zu einem Granulat verarbeitet wurde. Nach dem Abkühlen (Erstarren) der in den temperierten Hohlraum eingespritzten Formmasse wird das Spritzgussteil entformt.

Im Gegensatz zum Spritzguss wird bei der Extrusion ein endlos geformter Kunststoffstrang, hier aus einer erfindungsgemäßen Formmasse, im Extruder eingesetzt, wobei der Extruder eine Maschine zur Herstellung thermoplastischer Formstücke/Erzeugnisse ist. Einsetzbar sind
- Einschneckenextruder und Doppelschneckenextruder sowie die jeweiligen Untergruppen
- konventioneller Einschneckenextruder, förderwirksamer Einschneckenextruder,
- gegenläufiger Doppelschneckenextruder und gleichläufiger Doppelschneckenextruder.

Extrusionsanlagen bestehen vorzugsweise aus Extruder, Werkzeug, Nachfolgeeinrichtung, Extrusionsblasformen. Extrusionsanlagen zum Herstellen von Profilen bestehen vorzugsweise aus: Extruder, Profil-Werkzeug, Kalibrierung, Kühlstrecke, Raupen- und Rollenabzug, Trennvorrichtung und Kipprinne. Extrusionsanlagen zum Herstellen Folien bestehen aus: Extruder, Kühlstrecke, Streckung und Rollenabzug.

Erfindungsgemäß erhältliche Erzeugnisse sind vorzugsweise Materialien die wässrigen Medien, Luftfeuchtigkeit oder Spritzwasser ausgesetzt sind.

Derartig hydrolysestabilisierte Erzeugnisse finden sich insbesondere in Kraftfahrzeugen, in der Elektronik-, Telekommunikations-, Informationstechnologie, oder in der Computerindustrie, sowie im Haushalt, Sport, in der Medizin oder in der Unterhaltungsindustrie. In einer bevorzugten Variante werden die erfindungsgemäßen Zusammensetzungen zur Herstellung von hydrolysestabilen Folien z. B. für Verpackungen oder Solarzellen.

Gegenstand der vorliegenden Erfindung ist zudem die Verwendung der erfindungsgemäßen Zusammensetzung zur Herstellung von Erzeugnissen durch Extrusion, vorzugsweise für Verpackungen oder Solarzellen.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

Eingesetzt wurden:
1) Stab A: ein monomeres Carbodiimid mit einem NCN-Gehalt von ca. 10,8 Gew.% auf Basis von 2,6-Diisopropylphenylisocyanat, erhältlich bei der Lanxess Deutschland GmbH unter dem Namen Stabaxol® I.
2) Stab B: ein polymeres Carbodiimid mit einem NCN-Gehalt von ca. 11,8 Gew.% , D = ca. 1,8 und Mw = 2300 g/mol der Formel (II) mit n = ca. 3 - 4, R⁶, R⁷, R⁸ jeweils unabhängig für Methyl- oder Ethyl steht, wobei jeder Benzolring nur eine Methyl-Gruppe aufweist und R¹ = - NHCOOR⁵ und R⁵ = Cyclohexyl,.
3) Stab C: Ein Epoxid der Formel (III) mit n = im Bereich von 2 - 3 mit einem Epoxidäquivalent-Gewicht (DIN 16945) von 500 bis 700 g/eq und einem Erweichungspunkt (Mettler, DIN 51920) zwischen 75 und 90°C. [CAS Nr. 25068-38-6].
4) Esterbasierte Polymere: Polyethylenterephthalat (PET) erhältlich bei der Firma Novapet.

### Hydrolyseschutz in Polyethylenterephthalat (PET)

Zur Bewertung der Hydrolyseschutzwirkung in PET wurden die je nach Beispiel eingesetzten Stabilisatoren (Stab A, B sowie C) mittels eines Labordoppelschneckenextruders ZSK 25 der Firma Werner & Pfleiderer vor der unten beschriebenen Messung in PET eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Normprüfkörper in Wasserdampf bei einer Temperatur von 110°C gelagert und deren Reißfestigkeit in MPa gemessen.

Die Einsatzmengen der Mischungsbestandteile und deren Ergebnisse sind in der Tabelle 1 und 2 aufgelistet:

**Tabelle 1:**

| **Relative Reißfestigkeit (%)** | **Bsp. 1 (vgl.) PET** | **Bsp. 2 (vgl.) PET,** | **Bsp. 3 (vgl.) PET,** | **Bsp. 4 (vgl.) PET,** | **Bsp. 5 (vgl.) PET,** |
|---|---|---|---|---|---|
| | | **1 % Stab A** | **2 % Stab C** | **4% Stab C** | **1% Stab A, 1,5 % Stab C** |
| 0 Tage | 100 | 100 | 100 | 100 | 100 |
| 1 Tag | 75 | 86 | 61 | 63 | 86 |
| 2 Tage | 40 | 80 | 33 | 40 | 81 |
| 3 Tage | 0 | 64 | 0 | 0 | 65 |
| 4 Tage | | 44 | | | 47 |
| 5 Tage | | 30 | | | 38 |

| | | | | | |
|---|---|---|---|---|---|
| vgl. = Vergleichsbeispiel aus DE 10349168, erf.= erfindungsgemäß | | | | | |

**Tabelle 2:**

| **Relative Reißfestigkeit (%)** | **Bsp. 1 (vgl.) PET** | **Bsp. 6 (vgl.) PET,** | **Bsp. 7 (erf.) PET,** |
|---|---|---|---|
| | | **1 % Stab. B** | **1 % Stab B, 1,5 % Stab. C** |
| 0 Tage | 100 | 100 | 100 |
| 1 Tag | 75 | 86 | 89 |
| 2 Tage | 40 | 83 | 89 |
| 3 Tage | 0 | 76 | 87 |
| 4 Tage | | 60 | 82 |
| 5 Tage | | 40 | 64 |
| 6 Tage | | 18 | 54 |
| 7 Tage | | 0 | 40 |

| | | | |
|---|---|---|---|
| vgl. =Vergleichsbeispiel, erf.= erfindungsgemäß | | | |

Die Prozentangaben in den Tabellen 1 und 2 entsprechend den Gew.%-Anteilen an den entsprechenden Stabilisatoren.

Die Ergebnisse der Hydrolyseschutz-Tests beweisen, dass die Epoxide alleine keinen oder kaum einen stabilisierenden Effekt, überraschenderweise jedoch zusammen mit den erfindungsgemäßen polymeren Carbodiimiden (z. B. Stab. B) einen deutlichen positiven synergistischen Effekt auf die Hydrolysestabilität zeigen. Dagegen führt die Kombination von monomeren Carbodiimiden mit den Epoxiden zu keinem solchen synergistischen Effekt.

## Patentansprüche

1. Zusammensetzung enthaltend
(a) mindestens ein polymeres aromatisches Carbodiimid, der Formel (I)
R¹-R²-(-N=C=N-R²-)ₘ-R¹ (I),
in dem
m einer ganzen Zahl von 2 bis 500, bevorzugt 3 bis 20, ganz besonders bevorzugt 4 bis 10 entspricht,
R² = C₁-C₁₂-Alkyl- substituierte Arylene, C₇-C₁₈-Alkylaryl-substituierte Arylene sowie gegebenenfalls C₁-C₁₂-Alkyl- substituierte über Alkylengruppen verbrückte Arylene, die in Summe 7 bis 30 Kohlenstoffatome aufweisen, sowie Arylen,
und
R¹ = -NCO, -NCNR³, -NHCONHR³, -NHCONR³R⁴ oder -NHCOOR⁵ ist,
wobei R³ und R⁴ gleich oder verschieden sind und einen C₁-C₁₂-Alkyl-, C₆-C₁₂-Cycloalkyl-, C₇-C₁₈-Aralkyl- oder Arylrest darstellen und R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder ein Alkoxypolyoxyalkylenrest entspricht,
(b) mindestens ein Epoxid, vorzugsweise mit mindestens 2 Epoxidgruppen und
(c) mindestens ein thermoplastisches Polyester-basiertes Polymer.

2. Zusammensetzung nach Anspruch 1 , **dadurch gekennzeichnet, dass** es sich bei den polymeren aromatischen Carbodiimiden um Verbindungen der Formel (II) handelt, 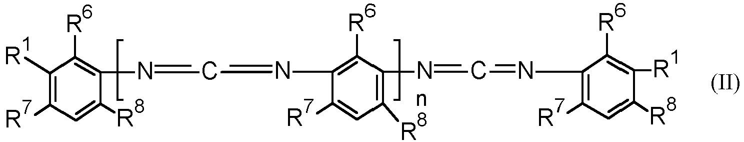
bei denen R¹ ausgewählt ist aus der Gruppe -NCO, -NHCONHR³, -NHCONR³R⁴ oder -NHCOOR⁵ ,
wobei R³ und R⁴ gleich oder verschieden sind und einen C₁-C₁₂-Alkyl-, C₆-C₁₂-Cycloalkyl-, C₇-C₁₈-Aralkylrest- oder Arylrest darstellen,
R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen, bevorzugt 12 - 20, besonders bevorzugt 16 - 18 Kohlenstoffatomen, oder einem Alkoxypolyoxyalkylenrest entspricht, und
R⁶, R⁷ und R⁸ jeweils unabhängig für Methyl- oder Ethyl steht, wobei jeder Benzolring nur eine Methyl-Gruppe aufweist und n = 1 bis 10 bedeutet.

3. Zusammensetzung nach Anspruch 1 oder 2, **dadurch gekennzeichnet, dass** es sich bei dem Epoxid um ein Epoxid mit mindestens 2 Epoxidgruppen handelt.

4. Zusammensetzung nach Anspruch 3, **dadurch gekennzeichnet, dass** es sich bei dem Epoxid um ein oligomeres Reaktionsprodukt aus Bisphenol A mit Epichlorhydrin mit einem gemäß EN ISO 10927 mittleren Molekulargewicht im Bereich von 900 bis 1200 g/mol und einem Epoxy Index (nach ISO 3001) im Bereich von 450 bis 600 Gramm pro Äquivalent handelt.

5. Zusammensetzung nach Anspruch 3, **dadurch gekennzeichnet, dass** es sich bei dem Epoxid um ein oligomeres Reaktionsprodukt aus Bisphenol A mit Epichlorhydrin der Formel (III), 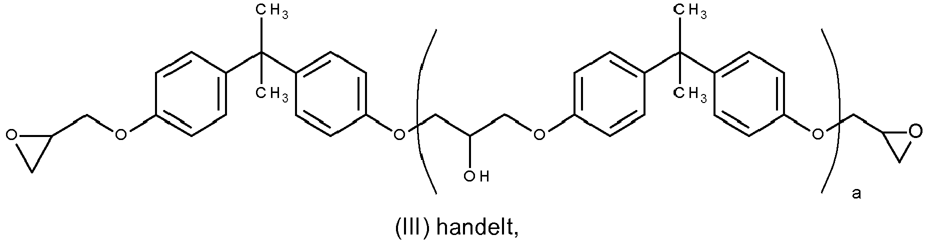 mit a von 0 bis 10, vorzugsweise mit a von 1 bis 8, besonders bevorzugt mit a von 1 bis 6, ganz besonders bevorzugt im Bereich von 2 bis 3, wobei a der durchschnittlichen Anzahl - entspricht.

6. Zusammensetzung nach Anspruch 3, **dadurch gekennzeichnet, dass** es sich bei dem Epoxid um eine Verbindung enthaltend die Einheiten 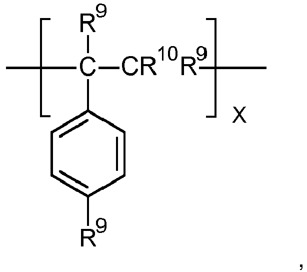 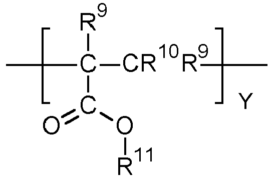 und 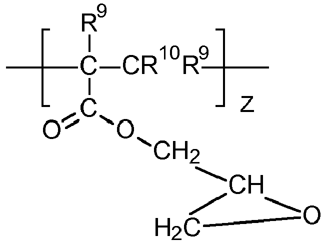 mit R⁹, R¹⁰ = unabhängig voneinander H, C₁-C₈-Alkyl, R¹¹ = unabhängig voneinander C₁-C₈ -Alkyl, x, y = 1 - 20, z = 2 - 20 , wobei als Endgruppen R* mit H, C₁-C₈ -Alkyl in beliebiger Reihenfolge handelt.

7. Zusammensetzung nach Anspruch 3, **dadurch gekennzeichnet, dass** es sich bei dem Epoxid um eine Verbindung der Formel (III) 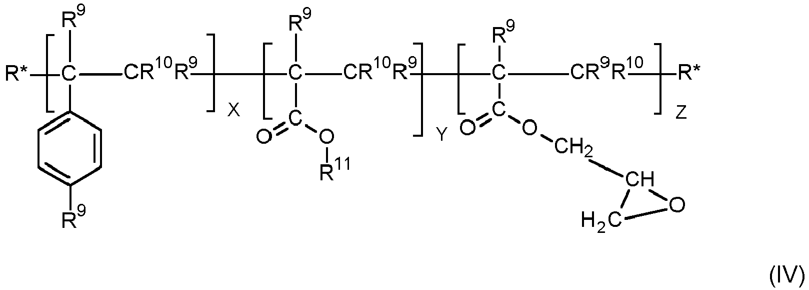 R⁹, R¹⁰ = H, C₁-C₈ -Alkyl, R¹⁰ = C₁-C₈ -Alkyl, x, y = 1 - 20 und z = 2 - 20, und R* = H, C₁-C₈ -Alkyl
handelt.

8. Zusammensetzung nach einem der Ansprüche 1 bis 6, **dadurch gekennzeichnet, dass** es sich bei dem Polyester-basiertes Polymer um Polyalkylterephthalate, vorzugsweise Polyethylenterephthalat (PET), Polybutylenterephthalat (PBT), Polybutylenadipat-Terephthalat (PBAT), Polytrimethylenterephthalat (PTT), sowie Copolyester, thermoplastische Polyester-Elastomere (TPE E), Ethylenvinylacetat (EVA), Polymilchsäure (PLA) und/oder PLA-Derivate, Polybutylensuccinate (PBS), Polyhydroxyalkanoate (PHA), sowie verschiedene Blends, thermoplastische Polyurethane, Polyurethan-Elastomere, PU-Klebstoffe, PU-Gießharze handelt.

9. Zusammensetzung nach einem der Ansprüche 1 bis 7, **dadurch gekennzeichnet, dass** die diese a), b) und c) in folgenden Anteilen enthalten:
a) 0,2 - 2 Gew. %, bevorzugt 0,4 - 1,5 Gew. % besonders bevorzugt 0,5 - 1,0 Gew.%;
b) 0,05 - 4 Gew. %, bevorzugt 0,1 - 2 Gew. % besonders bevorzugt 0,5 - 1,5 Gew.%;
c) 94 - 99,75 Gew. %, bevorzugt 96,5 - 99,5 Gew. % besonders bevorzugt 97,5 - 99,0 Gew. % .

10. Verfahren zur Herstellung einer Zusammensetzung nach einem der Ansprüche 1 bis 8, **dadurch gekennzeichnet, dass** die Komponenten a), b) in mindestens ein thermoplastisches Polyester-basiertes Polymer c) eingemischt werden.

11. Erzeugnisse, vorzugsweise hydrolysestabile Erzeugnisse, erhältlich durch Einmischen der Zusammensetzungen nach einem der Ansprüche 1 bis 8, in wenigstens einem Mischaggregat, vorzugsweise einem Compounder, und der Weiterverarbeitung zu Formmassen in Spritzgussverfahren oder mittels Extrusion.

12. Verwendung der Zusammensetzung nach einem der Ansprüche 1 bis 8 zur Herstellung von Erzeugnissen durch Extrusion, vorzugsweise für Verpackungen oder Solarzellen.
